(19) Europäisches Patentamt
European Patent Office
Office européen des brevets

(11) **EP 2 996 328 A1**

(12) **EUROPEAN PATENT APPLICATION**

(43) Date of publication:
**16.03.2016  Bulletin 2016/11**

(51) Int Cl.:
***H04N 5/367*** (2011.01)

(21) Application number: **14306401.2**

(22) Date of filing: **12.09.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Borel, Thierry**
**35576 Cesson-Sévigné (FR)**
• **Routhier, Pierre Hugues**
**Burbank, CA California 91504-3120 (US)**

(74) Representative: **Huchet, Anne**
**Technicolor**
**1-5 rue Jeanne d'Arc**
**92130 Issy-Les-Moulineaux (FR)**

(54) **Image processing method and apparatus, and image capturing device**

(57)    The disclosure provides a method for image processing, an image capturing device, and an image processing apparatus. The method includes: detecting at least one dark area in an image including a plurality of pixels, wherein each pixel has a first value defined by RAW data generated at a sensor in the image capturing device; computing a second value for each pixel in the at least one dark area; and replacing the first value with the second value for each pixel in the at least one dark area. Embodiments of the disclosure can reduce noise in dark areas of an image while keeping resolution of the entire image.

Fig. 3

EP 2 996 328 A1

**Description**

**TECHNICAL FIELD**

The disclosure relates to image processing, and more particularly, to a method for image processing in an image capturing device, an image processing apparatus, and an image capturing device.

**BACKGROUND**

Acquiring video content for cinema or TV applications is becoming more and more challenging as new video formats are coming in (e.g., 4K, 8K, HDR, HFR). When acquiring 4K content for instance at 24 fps, as the sensor is bigger than 2K sensors, to get the same framing, it is necessary to increase the magnification either by getting closer to the object of interest or by using bigger focal lenses. As a consequence, the Depth of Field (DoF), which is inversely proportional to the square of magnification, is drastically reduced (around -80%). To keep an acceptable DoF, it is then necessary to significantly reduce the aperture (or iris) of the camera lens.

Then, much less photons hit the photosites of the sensor during a frame period compared to 2K classical acquisition processes. To compensate for this, the lighting of the scene can be increased by a factor of 3 to 4. But this is not always a practical solution to set up, because make-up is not stable, talent is sweating and blinded.

In conclusion, shooting with small iris value is mandatory and as the light energy reaching the photosite is much smaller, there is a high risk of generating noise in the darker areas of the scene. In addition, the Iris cannot be too small neither since diffraction problems would occur, killing the resolution. This problem is even worse when shooting with Higher Frame Rates (48, 60 fps) as this is a trend today for some cinematographers or for TV sport events. For TV applications, it is even envisaged to standardize Ultra HDTV formats at 120 fps. At this very high speed, the integration time on the sensor is very small, taking into account that the shutter speed is usually adjusted at 180°, namely one half of the frame duration.

Up to now, in real business, most of existing 4K contents that have been realized for TV applications are made of landscapes, far away from the cameras, in the sunshine and then DoF is not a problem. Test have been made in studios (BSkyB) for close ups on a newscaster and the DoF was so small that only the eyes of the talent were in focus, ears and nose were out of focus. Today, only pure animation content can be made in 4K without any DoF problem. In cinema applications, 4K contents do not have a 4K resolution most of the time because of the above DoF problem.

Noise reduction algorithms exist but are activated downstream in the workflow of image processing, thereby filtering out the details of the whole picture (not only dark areas) and reducing the resolution of the image content of interest.

There is a need for a technique of reducing noise, which will appear in the dark areas of one or more images, when shooting under the conditions described above. This technique would allow keeping high dynamic ranges even when shooting in severe conditions (e.g., 4K, HFR, HDR).

**SUMMARY**

According to a first aspect of the disclosure, a method for image processing in an image capturing device is provided. The method includes: detecting at least one dark area in an image including a plurality of pixels, wherein each pixel has a first value defined by RAW data generated at a sensor in the image capturing device; computing a second value for each pixel in the at least one dark area; and replacing the first value with the second value for each pixel in the at least one dark area.

In an embodiment, the computing a second value comprises: for each pixel in the at least one dark area, computing, as the second value, a mean value of a predetermined number of pixels including the pixel and its neighboring pixels in the at least one dark area.

In an embodiment, the image is included in a sequence of images captured by the image capturing device, wherein said computing a second value comprises: for each pixel in the at least one dark area, computing, as the second value, a mean value of pixels at the same position in a predetermined number of images including the image and its neighboring images in the sequence.

In an embodiment, the image is included in a sequence of images captured by the image capturing device, wherein said computing a second value comprises: for each pixel in the at least one dark area, computing, as the second value, a mean value of a predetermined number of pixels in the at least one dark area in a predetermined number of images in the sequence, wherein the predetermined number of pixels includes the pixel and its neighboring pixels in the at least one dark area, and the predetermined number of images includes the image and its neighboring images in the sequence.

In an embodiment, the neighboring pixels have the same color as the pixel.

In an embodiment, after said replacing the first value with the second value, the method further comprises:

performing, on the image, further processing including debayering.

According to a second aspect of the disclosure, an image capturing device is provided including: a sensor unit configured to generate RAW data and form an image including a plurality of pixels, wherein each pixel has a first value defined by the RAW data; and an image processing unit configured to detect at least one dark area in the image, compute a second value for each pixel in the at least one dark area, and replace the first value with the second value for each pixel in the at least one dark area.

In an embodiment, the image processing unit computes the second value by: for each pixel in the at least one dark area, computing, as the second value, a mean value of a predetermined number of pixels including the pixel and its neighboring pixels in the at least one dark area.

In an embodiment, the image capturing device is configured to capture a sequence of images including the image, wherein the image processing unit computes the second value by: for each pixel in the at least one dark area, computing, as the second value, a mean value of pixels at the same position in a predetermined number of images including the image and its neighboring images in the sequence.

In an embodiment, the image capturing device is configured to capture a sequence of images including the image, wherein the image processing unit computes the second value by: for each pixel in the at least one dark area, computing, as the second value, a mean value of a predetermined number of pixels in the at least one dark area in a predetermined number of images in the sequence, wherein the predetermined number of pixels includes the pixel and its neighboring pixels in the at least one dark area, and the predetermined number of images includes the image and its neighboring images in the sequence.

In an embodiment, the neighboring pixels have the same color as the pixel.

In an embodiment, the image processing unit is further configured to perform, on the image, further processing including debayering.

According to a third aspect of the disclosure, an image processing apparatus is provided including: a detection unit configured to detect at least one dark area in an image including a plurality of pixels, wherein each pixel has a first value defined by RAW data generated at a sensor in an image capturing device; and a computation unit configured to compute a second value for each pixel in the at least one dark area, and replace the first value with the second value for each pixel in the at least one dark area.

In an embodiment, the computation unit computes the second value by: for each pixel in the at least one dark area, computing, as the second value, a mean value of a predetermined number of pixels including the pixel and its neighboring pixels in the at least one dark area.

In an embodiment, the image is included in a sequence of images captured by the image capturing device, wherein the computation unit computes the second value by: for each pixel in the at least one dark area, computing, as the second value, a mean value of pixels at the same position in a predetermined number of images including the image and its neighboring images in the sequence.

In an embodiment, the image is included in a sequence of images captured by the image capturing device, wherein the computation unit computes the second value by: for each pixel in the at least one dark area, computing, as the second value, a mean value of a predetermined number of pixels in the at least one dark area in a predetermined number of images in the sequence, wherein the predetermined number of pixels includes the pixel and its neighboring pixels in the at least one dark area, and the predetermined number of images includes the image and its neighboring images in the sequence.

In an embodiment, the neighboring pixels have the same color as the pixel.

In an embodiment, the image processing apparatus performs, on the image, further processing including debayering.

According to a fourth aspect of the disclosure, there is provided a computer program product downloadable from a communication network and/or recorded on a medium readable by computer and/or executable by a processor, comprising program code instructions for implementing the steps of a method according to the first aspect of the disclosure.

According to a fifth aspect of the disclosure, there is provided a non-transitory computer-readable medium comprising a computer program product recorded thereon and capable of being run by a processor, including program code instructions for implementing the steps of a method according to the first aspect of the disclosure.

## BRIEF DESCRIPTION OF THE DRAWINGS

The above and other objects, features and advantages will be more apparent from the following description of embodiments with reference to the figures, in which:

Fig. 1 is a schematic block diagram showing an image capturing device according to an embodiment of the disclosure;

Fig. 2 is a schematic block diagram showing an image processing apparatus according to an embodiment of the disclosure;

Fig. 3     is a flowchart illustrating a method for image processing according to an embodiment of the disclosure;

Fig. 4a     shows an exemplary image to which the embodiments of the disclosure may be applied;

Fig. 4b     shows a detection result of dark areas in the image of Fig. 6a;

Fig. 5     is a schematic diagram showing a spatial processing example according to an embodiment of the disclosure;

Fig. 6     is a schematic diagram showing a temporal processing example according to an embodiment of the disclosure;

Fig. 7     is a schematic diagram showing a spatio-temporal processing example according to an embodiment of the disclosure; and

Fig. 8     is a schematic diagram showing a modified example of image processing according to an embodiment of the disclosure.

## DETAILED DESCRIPTION OF EMBODIMENTS

The embodiments of the disclosure will be detailed below with reference to the drawings. It should be noted that the following embodiments are illustrative only, rather than limiting the scope of the disclosure. Detailed description of any well-known steps, devices, components and the like is omitted here to avoid obscuring of the disclosure.

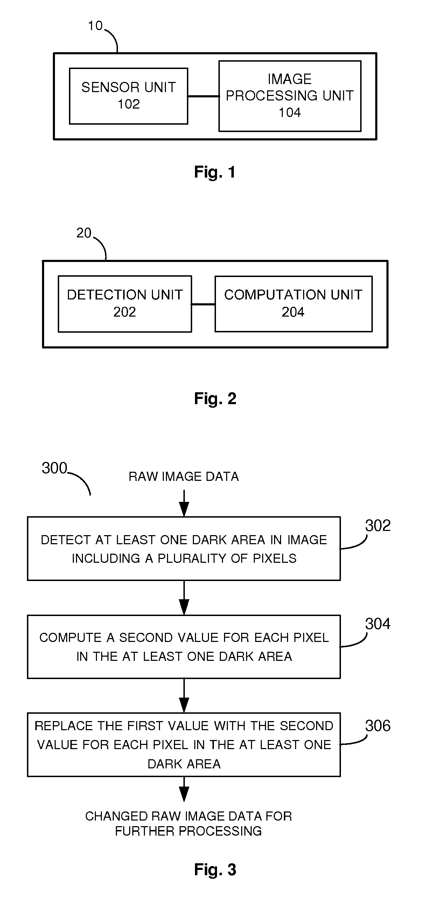

Fig. 1 is a schematic block diagram showing an image capturing device according to an embodiment of the disclosure. The image capturing device 10 may be any device capable of capturing still and/or moving images, such as digital camera or camcorder. As shown in Fig. 1, the capturing device 10 includes a sensor unit 102, and an image processing unit 104. The sensor unit 102 may be configured to generate RAW data and form an image including a plurality of pixels. Each pixel may have a first value defined by the RAW data. "RAW data" is a well-known term in the art, and generally refers to data collected from a source, such as a camera, that has not been subjected to any processing or manipulation. In an example, the sensor unit 102 may be implemented by a Charge Coupled Device (CCD) device or a CMOS sensor device with a Bayer array overlaid thereon. The image processing unit 104 is configured to detect at least one dark area in the image, compute a second value for each pixel in the at least one dark area, and replace the first value with the second value for each pixel in the at least one dark area. The image processing unit 104 may be implemented, for example, by a processor executing a program for performing the detecting, computing and replacing operations. Detection of the dark area may be performed using any of known methods already available in most of existing digital cameras. The first and second values may be, for example, the luminance value of a pixel. Here, a "dark area" may refer to an area having a luminance less than a preset threshold in an image. The preset threshold may be variable between images or sequences of images if required.

With the above embodiment of the disclosure, the above operations are operated at the photosite level of the sensor unit when RAW data are generated, for example, before debayering, which is upstream in the workflow of image processing. Further, the above image processing is operated only on dark areas to reduce noise in the dark areas while preserving the resolution of the entire image. This is considering that there are very little chances that high resolution patterns both in space and time are present in those dark areas, and if there are, they would be barely noticeable to the human eye.

In an embodiment, for each pixel in the at least one dark area, the image processing unit 104 computes, as the second value, a mean value of a predetermined number of pixels including the pixel and its neighboring pixels in the at least one dark area. This is called spatial processing here. The predetermined number is a parameter that can be set by a user of the image capturing device 10. The neighboring pixels may be pixels immediately adjacent to the current pixel, or pixels around, but not immediately adjacent to, the current pixel. This may be set up by the user.

In another embodiment, the image capturing device 10 may capture a sequence of images, and the current image may be from the sequence. For each pixel in the at least one dark area of the current image, the image processing unit 104 may computes, as the second value, a mean value of pixels at the same position in a predetermined number of images including the image and its neighboring images in the sequence. This is called temporal processing here. The predetermined number is a parameter that can be set by the user. The neighboring images may be images preceding and/or following the current image. For example, for the Nth image in a middle part of a sequence of M images, the neighboring images may include the (N-p)th, ...(N-1)th, (N+1)th,..., (N+p)th, where M, N, and p are positive numbers, M>N, and N>p. For the first/last image, the neighboring images may be images following/preceding the first/last image. This may be set up by the user. In the temporal processing, a storage device, such as frame memory, may be required to temporally storing the current image and its neighboring images.

In a further embodiment, the image capturing device 10 also may capture a sequence of images, and the current image may be from the sequence. For each pixel in the at least one dark area, the image processing unit 104 may compute, as the second value, a mean value of a predetermined number of pixels in the at least one dark area in a predetermined number of images in the sequence. This is called spatio-temporal processing here, which is combination of the above spatial and temporal processing. The predetermined number of pixels, and the predetermined number of images may be set as above described. Similarly to the temporal processing, a storage device, such as frame memory, may be required to temporally storing the current image and its neighboring images.

In a still further embodiment where the dark areas are colored, for example, in Red, Green, or Blue, the neighboring pixels described above may be pixels around the current pixel and having the same color as the current pixel.

With the above one or more embodiments of the disclosure, a new value is computed for each pixel belonging to a dark area where noise is likely to occur. This new value may be the mean value of the neighboring pixels in space, or in time, or in both of space and time. As the luminance value of a pixel is made of a signal part S and a noise part N, the S parts of the pixels (e.g., S1, S2, S3, S4, and S5) are adding linearly, and the N parts (e.g., N1, N2, N3, N4 and N5) are adding quadratic, the signal over noise (S/N) ratio can be dramatically increased, as illustrated in the following formulas. Here, assume that the current pixel is made of a signal part S3 and a noise part N3.

$$S_{mean} = (S1+S2+S3+S4+S5)/5$$

$$N_{mean} = SQRT\ (N1^2 + N2^2 + N3^2 + N4^2 + N5^2)/5$$

$$S_{mean}/N_{mean} > S3/N3$$

Accordingly, noises in the dark areas can be effectively reduced while preserving the resolution of the entire image.

In an embodiment, the image processing unit may be further configured to perform further processing on the image after changing the value of each pixel in each dark area. The further processing may include debayering.

Although the above embodiments are described by using the mean value as the second value, the present disclosure is not limited thereto. Any other statistical quantity may be used as along as it can exploit the above characteristic of the signal and noise parts to increase the S/N ratio.

Fig. 2 is a schematic block diagram showing an image processing apparatus according to an embodiment of the disclosure. In an embodiment, the image processing apparatus 20 may be included in the image capturing device 10 of Fig. 1, and used as the image processing unit 104. As shown in Fig. 2, the image processing apparatus 20 includes a detection unit 202, and a computation unit 204. The detection unit 202 may detect at least one dark area in an image including a plurality of pixels. The image may be formed at a sensor of a camera or camcorder, for example. In the image, each pixel may have a first value defined by RAW data generated at the sensor. The computation unit 204 may compute a second value for each pixel in the at least one dark area, and replace the first value with the second value for each pixel in the at least one dark area.

In an embodiment, for each pixel in the at least one dark area, the computation unit 204 computes, as the second value, a mean value of a predetermined number of pixels including the pixel and its neighboring pixels in the at least one dark area. In another embodiment, the current image may be one of a sequence of images. For each pixel in the at least one dark area of the current image, the computation unit 204 may computes, as the second value, a mean value of pixels at the same position in a predetermined number of images including the image and its neighboring images in the sequence. In a further embodiment where the current image may be one of a sequence of image, the computation 204 may compute, as the second value for each pixel in the at least one dark area, a mean value of a predetermined number of pixels in the at least one dark area in a predetermined number of images in the sequence. In a still further embodiment where the dark areas are colored, for example, in Red, Green, or Blue, the neighboring pixels described above may be pixels around the current pixel and having the same color as the current pixel. For more details, the above description of the image processing unit 104 may be referred to.

In an embodiment, the image processing apparatus 20 may perform, on the image, further processing including, for example, debayering.

Fig. 3 is a flowchart illustrating a method for image processing according to an embodiment of the disclosure. The method 300 may be implemented in the image capturing device 10 of Fig. 1 or the image processing apparatus 20 of Fig. 2. As shown in Fig. 3, a flow of RAW image data is inputted. At step 302, at least one dark area is detected in an image including a plurality of pixels. Each pixel has a first value defined by the inputted RAW data generated at a sensor in an image capturing device. At step 304, a second value is computed for each pixel in the at least one dark area. Then, at step 306, the second value is used to replace the first value of each pixel in the at least one dark area, thereby changing the inputted RAW data. The outputted flow of changed RAW data may be subjected to further processing.

In different embodiments, the step 304 may be implemented in different manners, such as spatial, temporal, and spatio-temporal processing as described above. Specifically, in an embodiment, for each pixel in the at least one dark area, a mean value of a predetermined number of pixels including the pixel and its neighboring pixels in the at least one dark area may be computed as the second value at step 304. In another embodiment, the current image may be one of a sequence of images. For each pixel in the at least one dark area of the current image, a mean value of pixels at the same position in a predetermined number of images including the image and its neighboring images in the sequence may be computed as the second value at step 304. In a further embodiment where the current image may be one of a sequence of image, a mean value of a predetermined number of pixels in the at least one dark area in a predetermined number of images in the sequence may be computed as the second value for each pixel in the at least one dark area at step 304. In a still further embodiment where the dark areas are colored, for example, in Red, Green, or Blue, the neighboring pixels described above may be pixels around the current pixel and having the same color as the current pixel. For more details, the above description of the image processing unit 104 may be referred to.

In an embodiment, the method 300 may further include, after step 306, performing, on the image, further processing including debayering, for example.

The foregoing illustrates the concept of the present disclosure with reference to the drawings. Hereafter, the concept of the present disclosure will be further illustrated by providing several examples, which are illustrative other than limiting the present disclosure.

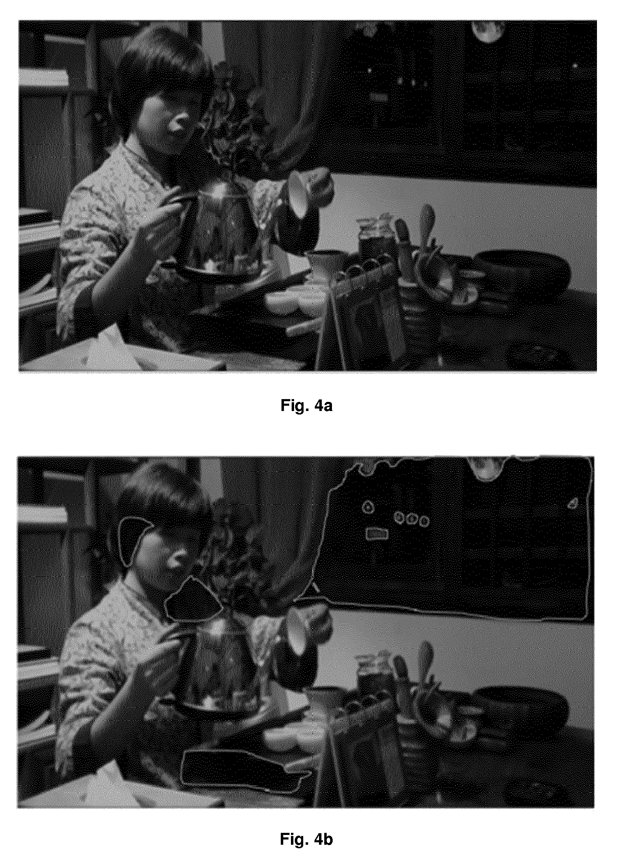

Fig. 4a shows an exemplary image to which the embodiments of the disclosure may be applied. It can be seen from the image that there are several dark areas, in which the luminance values of pixels are less than those of pixels in brighter areas. Any of known methods already available in most of existing digital cameras may be used to detect these dark areas. For example, a threshold may be first set automatically or manually by the user. Pixels having luminance values less than the threshold may be found, and then dark areas may be detected by checking connectivity among these pixels. Fig. 4b shows a detection result of dark areas in the image of Fig. 4a. Four dark areas are surrounded by lines. These dark areas are areas where noise is likely to appear. According to the embodiments of the disclosure, any of the following processes may be performed to reduce noise in each of the dark areas.

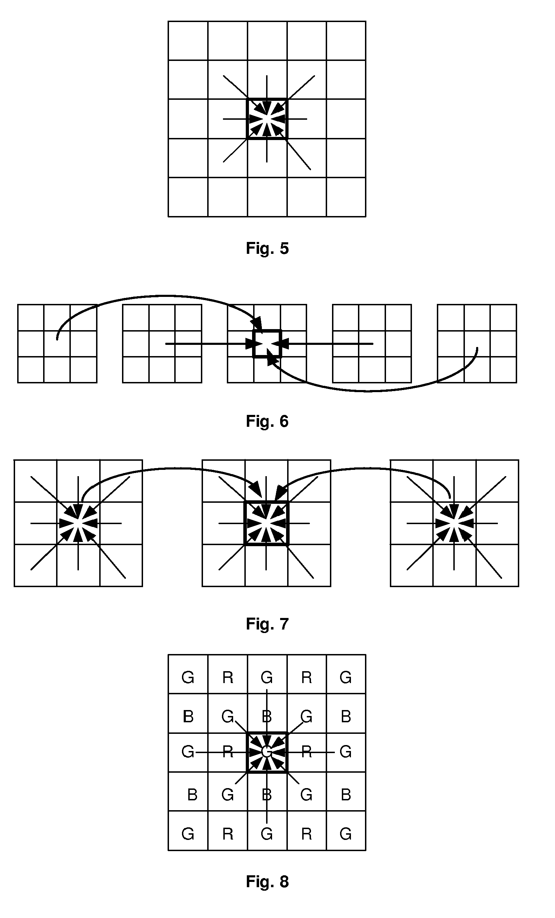

Fig. 5 is a schematic diagram showing a spatial processing example according to an embodiment of the disclosure. For the purpose of illustration but not limitation, each pixel is shown in a shape of square. Each of the pixels shown in Fig. 5 has a value defined by RAW data generated at a sensor of a camera or camcorder, for example. In this example, eight immediate neighboring pixels are used to processing the current pixel (denoted by thick lines), i.e., the pixel surrounded by the eight neighboring pixels. The neighboring pixels are in the same dark area as the current pixel. For the current pixel, a new value is computed equal to the mean value of the current pixel and the eight neighboring pixels. Here, the number of neighboring pixels to be taken into account for the calculation is not limited to eight, but is a configurable parameter that can be set by the user. The higher this number, the more efficient is the noise reduction but the higher the spatial filtering. Further, it is not necessary for neighboring pixels to be directly adjacent to the current pixel.

The user can configure which pixels to be neighbors of the current pixel. Then, the computed new value may be used to replace the original value of the current pixel in the RAW data flow. The spatial processing may be iteratively performed on each pixel in each dark area, until there is no unprocessed pixel and dark area.

Fig. 6 is a schematic diagram showing a temporal processing example according to an embodiment of the disclosure. As shown in Fig. 6, there are five images captured in a sequence. The middle image is the current image having the current pixel shown in a shape of square of thick lines. Each of the pixels shown in Fig. 6 has a value defined by RAW data generated at a sensor of a camera or camcorder, for example. For each pixel in the current image belonging to the dark area, a new value is computed equal to the mean value of the pixels at the same position in the four neighboring images. The number of neighboring images to be taken into account for the calculation is not limited to four, but is a configurable parameter that can be set by the user. The higher this number, the more efficient is the noise reduction but the higher the temporal filtering. In this example, four neighboring images directly preceding and following the current image are used to processing the current image. It is not necessary to use such neighboring images. The user can configure which images to be neighbors of the current image. Then, the computed new value may be used to replace the original value of the current pixel in the RAW data flow. The temporal processing may be iteratively performed on each pixel in each dark area of the current image, until there is no unprocessed pixel and dark area.

Fig. 7 is a schematic diagram showing a spatio-temporal processing example according to an embodiment of the disclosure. As shown in Fig. 7, there are three images captured in a sequence. The middle image is the current image having the current pixel shown in a shape of square of thick lines. Each of the pixels shown in Fig. 7 has a value defined by RAW data generated at a sensor of a camera or camcorder, for example. For each pixel in the current image belonging to the dark area, a new value is computed equal to the mean value of the current pixel, the two co-located pixels in the two neighboring image, and the 8*3 neighboring pixels in the dark area in all of the three images. The numbers of neighboring images and neighboring pixels to be taken into account for the calculation are not limited to the above number, but are two configurable parameters that can be fixed by the user. The higher these numbers, the more efficient and robust is the noise reduction but the higher the spatio-temporal filtering. In this example, two neighboring images directly preceding and following the current image are used to processing the current image. It is not necessary to use such neighboring images. The user can configure which images to be neighbors of the current image. Further, it is not necessary for neighboring pixels to be directly adjacent to the current pixel. The user can configure which pixels to be neighbors of the current pixel. Then, the computed new value may be used to replace the original value of the current pixel in the RAW data flow. The spatio-temporal processing may be iteratively performed on each pixel in each dark area of the current image, until there is no unprocessed pixel and dark area.

Fig. 8 is a schematic diagram showing a modified example of image processing according to an embodiment of the disclosure. This example takes the Bayer pattern into account. To be noted, the present disclosure is not limited to the Bayer pattern, and any other known pattern is applicable here. The pixels in the dark area are colored in Red (R), Green (G) or Blue (B). Computation of the mean value is performed not between immediate neighboring pixels but between neighboring pixels having the same color R, G or B with the current pixel. As shown in Fig. 8, the current pixel is green, and thus eight green pixels around the current pixel are selected as the neighboring pixels.

The present disclosure may be implemented by a computer program product, for example, in the form of a computer-readable medium carrying computer program codes structured in computer program modules. The computer program modules, when executed in a processor, cause the image capturing device or the image processing apparatus to perform the actions described above in conjunction with the figures mentioned above. Alternatively, at least one of the code means may be implemented at least partly as hardware circuits.

The processor may be a single CPU (Central processing unit), but could also comprise two or more processing units. For example, the processor may include general purpose microprocessors; instruction set processors and/or related chips sets and/or special purpose microprocessors such as Application Specific Integrated Circuit (ASICs). The processor may also comprise board memory for caching purposes. For example, the computer program product may be a flash memory, a Random-access memory (RAM), a Read-Only Memory (ROM), or an EEPROM, and the computer program modules described above could in alternative embodiments be distributed on different computer program products in the form of memories.

The disclosure has been described above with reference to embodiments thereof. It should be understood that various modifications, alternations and additions can be made by those skilled in the art without departing from the spirits and scope of the disclosure. Therefore, the scope of the disclosure is not limited to the above particular embodiments but only defined by the claims as attached.

## Claims

1.  Method (300) for image processing in an image capturing device, the method comprising:

    - detecting (302) at least one dark area in an image including a plurality of pixels, wherein each pixel has a first value defined by RAW data generated at a sensor in the image capturing device;
    - computing (304) a second value for each pixel in the at least one dark area; and
    - replacing (306) the first value with the second value for each pixel in the at least one dark area.

2.  Method (300) according to claim 1, wherein said computing a second value comprises:

    - for each pixel in the at least one dark area, computing, as the second value, a mean value of a predetermined number of pixels including the pixel and its neighboring pixels in the at least one dark area.

3.  Method (300) according to claim 1, wherein the image is included in a sequence of images captured by the image capturing device,
    wherein said computing a second value comprises:

    - for each pixel in the at least one dark area, computing, as the second value, a mean value of pixels at the same position in a predetermined number of images including the image and its neighboring images in the sequence.

4.  Method (300) according to claim 1, wherein the image is included in a sequence of images captured by the image capturing device,
    wherein said computing a second value comprises:

    - for each pixel in the at least one dark area, computing, as the second value, a mean value of a predetermined number of pixels in the at least one dark area in a predetermined number of images in the sequence, wherein the predetermined number of pixels includes the pixel and its neighboring pixels in the at least one dark area, and the predetermined number of images includes the image and its neighboring images in the sequence.

5. Method (300) according to claim 2 or 4, wherein the neighboring pixels have the same color as the pixel.

6. Method (300) according to claim 1, wherein after said replacing the first value with the second value, the method further comprises:

- performing, on the image, further processing including debayering.

7. Image capturing device (10), comprising:

- a sensor unit (102) configured to generate RAW data and form an image including a plurality of pixels, wherein each pixel has a first value defined by the RAW data; and
- an image processing unit (104) configured to detect at least one dark area in the image, compute a second value for each pixel in the at least one dark area, and replace the first value with the second value for each pixel in the at least one dark area.

8. Image capturing device (10) according to claim 7, wherein the image processing unit (104) computes the second value by:

- for each pixel in the at least one dark area, computing, as the second value, a mean value of a predetermined number of pixels including the pixel and its neighboring pixels in the at least one dark area.

9. Image capturing device (10) according to claim 7, wherein the image capturing device (10) is configured to capture a sequence of images including the image,
wherein the image processing unit (104) computes the second value by:

- for each pixel in the at least one dark area, computing, as the second value, a mean value of pixels at the same position in a predetermined number of images including the image and its neighboring images in the sequence.

10. Image capturing device (10) according to claim 7, wherein the image capturing device (10) is configured to capture a sequence of images including the image,
wherein the image processing unit (104) computes the second value by:

- for each pixel in the at least one dark area, computing, as the second value, a mean value of a predetermined number of pixels in the at least one dark area in a predetermined number of images in the sequence, wherein the predetermined number of pixels includes the pixel and its neighboring pixels in the at least one dark area, and the predetermined number of images includes the image and its neighboring images in the sequence.

11. Image capturing device (10) according to claim 8 or 10, wherein the neighboring pixels have the same color as the pixel.

12. Image capturing device (10) according to claim 7, wherein the image processing unit (104) is further configured to perform, on the image, further processing including debayering.

13. Image processing apparatus (20), comprising:

- a detection unit (202) configured to detect at least one dark area in an image including a plurality of pixels, wherein each pixel has a first value defined by RAW data generated at a sensor in an image capturing device; and
- a computation unit (204) configured to compute a second value for each pixel in the at least one dark area, and replace the first value with the second value for each pixel in the at least one dark area.

14. Computer program product downloadable from a communication network and/or recorded on a medium readable by computer and/or executable by a processor, comprising program code instructions for implementing the steps of a method according to at least one of claims 1 to 6.

15. Non-transitory computer-readable medium comprising a computer program product recorded thereon and capable of being run by a processor, including program code instructions for implementing the steps of a method according to at least one of claims 1 to 6.

10

```
┌─────────────────────────────────────────────┐
│  ┌──────────────┐      ┌──────────────────┐  │
│  │              │      │      IMAGE       │  │
│  │ SENSOR UNIT  │──────│ PROCESSING UNIT  │  │
│  │     102      │      │       104        │  │
│  └──────────────┘      └──────────────────┘  │
└─────────────────────────────────────────────┘
```

**Fig. 1**

20

```
┌─────────────────────────────────────────────┐
│  ┌──────────────┐  ┌──────────────────────┐  │
│  │DETECTION UNIT│──│  COMPUTATION UNIT    │  │
│  │     202      │  │        204           │  │
│  └──────────────┘  └──────────────────────┘  │
└─────────────────────────────────────────────┘
```

**Fig. 2**

300

RAW IMAGE DATA

```
┌─────────────────────────────────────────┐
│  DETECT AT LEAST ONE DARK AREA IN IMAGE  │  302
│    INCLUDING A PLURALITY OF PIXELS       │
└─────────────────────────────────────────┘

┌─────────────────────────────────────────┐
│  COMPUTE A SECOND VALUE FOR EACH PIXEL   │  304
│     IN THE AT LEAST ONE DARK AREA        │
└─────────────────────────────────────────┘

┌─────────────────────────────────────────┐
│ REPLACE THE FIRST VALUE WITH THE SECOND  │  306
│ VALUE FOR EACH PIXEL IN THE AT LEAST ONE │
│               DARK AREA                  │
└─────────────────────────────────────────┘
```

CHANGED RAW IMAGE DATA FOR
FURTHER PROCESSING

**Fig. 3**

Fig. 4a

Fig. 4b

**Fig. 5**

**Fig. 6**

**Fig. 7**

| G | R | G | R | G |
|---|---|---|---|---|
| B | G | B | G | B |
| G | R | G | R | G |
| B | G | B | G | B |
| G | R | G | R | G |

**Fig. 8**

Europäisches
Patentamt

European
Patent Office

Office européen
des brevets

# EUROPEAN SEARCH REPORT

Application Number

EP 14 30 6401

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 781 017 A2 (NVIDIA CORP [US]) 2 May 2007 (2007-05-02) | 1,2,5-8, 11-15 | INV. H04N5/367 |
| Y | * claims 1,4, 5, 6; figures 3, 4, 5, 7 * | 3,4,9,10 | |
| X | EP 1 605 403 A1 (ST MICROELECTRONICS SRL [IT]) 14 December 2005 (2005-12-14) | 1-15 | |
| Y | * paragraphs [0072], [0081], [0097]; claims 9, 17; figures 1,6, 7 * | 3,4,9,10 | |
| Y | US 2013/155265 A1 (BAE JUM-HAN [KR] ET AL) 20 June 2013 (2013-06-20) * paragraphs [0131] - [0135]; figure 9 * | 3,4,9,10 | |
| X | US 6 965 395 B1 (NETER SARIT [US]) 15 November 2005 (2005-11-15) | 1,2,5-8, 11-15 | |
| Y | * claim 6; figure 4 * | 3,4,9,10 | |
| X | JP 2010 212788 A (SHARP KK) 24 September 2010 (2010-09-24) | 1,2,5-8, 11-15 | |
| Y | * claims 1, 5, 6; figure 3 * | 3,4,9,10 | |

TECHNICAL FIELDS
SEARCHED       (IPC)

H04N

The present search report has been drawn up for all claims

| Place of search | Date of completion of the search | Examiner |
|---|---|---|
| Munich | 5 February 2015 | Trimeche, Mejdi |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

............................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 14 30 6401

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2015

| Patent document cited in search report | | Publication date | Patent family member(s) | | Publication date |
|---|---|---|---|---|---|
| EP 1781017 | A2 | 02-05-2007 | AT | 485674 T | 15-11-2010 |
| | | | CN | 1960439 A | 09-05-2007 |
| | | | EP | 1781017 A2 | 02-05-2007 |
| | | | JP | 5144916 B2 | 13-02-2013 |
| | | | JP | 2007143131 A | 07-06-2007 |
| | | | KR | 20070045126 A | 02-05-2007 |
| | | | TW | I389553 B | 11-03-2013 |
| | | | US | 2007091187 A1 | 26-04-2007 |
| EP 1605403 | A1 | 14-12-2005 | EP | 1605403 A1 | 14-12-2005 |
| | | | US | 2005276510 A1 | 15-12-2005 |
| | | | US | 2010040303 A1 | 18-02-2010 |
| US 2013155265 | A1 | 20-06-2013 | CN | 104025565 A | 03-09-2014 |
| | | | KR | 20130069128 A | 26-06-2013 |
| | | | US | 2013155265 A1 | 20-06-2013 |
| | | | WO | 2013089370 A1 | 20-06-2013 |
| US 6965395 | B1 | 15-11-2005 | NONE | | |
| JP 2010212788 | A | 24-09-2010 | NONE | | |

EPO FORM P0459

For more details about this annex : see Official Journal of the European Patent Office, No. 12/82